# EUROPÄISCHE PATENTSCHRIFT

(11) **EP 2 842 117 B1**
(45) Veröffentlichungstag und Bekanntmachung des Hinweises auf die Patenterteilung: **25.08.2021**
(21) Anmeldenummer: 13719008.8
(22) Anmeldetag: 04.04.2013
(51) Int. Cl.: G08G 1/16, B60W 30/00

(54) **VERFAHREN ZUR DARSTELLUNG EINER FAHRZEUGUMGEBUNG**
METHOD FOR DISPLAYING VEHICLE SURROUNDINGS
PROCÉDÉ DE REPRÉSENTATION DE L'ENVIRONNEMENT D'UN VÉHICULE

(30) Priorität: 26.04.2012 DE 102012103669
(43) Veröffentlichungstag der Anmeldung: 04.03.2015
(73) Patentinhaber: Continental Teves AG & Co. OHG, 60488 Frankfurt am Main (DE)
(72) Erfinder: HOHM, Andree, 63785 Obernburg (DE); WALDBAUER, Dirk, 65817 Eppstein (DE); FRITZ, Stefan, 64390 Erzhausen (DE); BERTHOLD, Thomas, 64285 Darmstadt (DE); YIN, Xiuxun, 47249 Duisburg (DE); LÜKE, Stefan, 61191 Rosbach von der Höhe (DE)
(74) Vertreter: Continental Corporation
(86) Internationale Anmeldenummer: PCT/DE2013/100121
(87) Internationale Veröffentlichungsnummer: WO 2013/159768

(56) Entgegenhaltungen:
- EP-A1- 2 012 211
- WO-A2-2011/141018
- DE-A1-102005 002 719
- DE-A1-102007 016 868
- DE-A1-102009 045 286

## Beschreibung

Nahezu alle bekannten serienverfügbaren Fahrerassistenzsysteme, die auf Daten von Umgebungserfassungssensorik basieren, nutzen ein objektabstraktes Umfeldmodell, typischerweise wird eine Objektliste mit Umgebungsobjekten zur Verfügung gestellt. Von Objekten unbesetzte Flächen, die einen potentiellen Manöverraum definieren, werden über einen solchen Ansatz nicht abgedeckt. Im Bereich der Forschung sind Ansätze bekannt, Sensoren zu verwenden, die eine Belegungsinformation über einen definierten Bereich im Umfeld des Fahrzeuges liefern und diese in eine Belegungskarte eintragen. Eine solche Darstellung erlaubt eine mittelbare Einschätzung des zur Verfügung stehenden Manöverraumes. Nachteilig ist an diesem Verfahren jedoch, dass eine Belegungskarte (Belegungsgitter) eine große Datenmenge umfasst, die heute für den Einsatz in einer Serienanwendung zu groß ist, da die zur Kommunikation zwischen Steuergeräten verfügbaren Bandbreiten bei den üblicherweise verwendeten CAN-Verbindungen für eine Übertragung in Echtzeit nicht ausreichen.

Das Dokument DE102009045286 A1 betrifft ein Verfahren zur Abbildung des Umfelds eines Fahrzeugs, bei dem jeweils detektierte Objekte im Umfeld des Fahrzeugs mit zwei Koordinatenpunkten und einer zu dem jeweiligen Koordinatenpunkt zugeordneten Positionsunschärfe beschrieben werden. Zur Beschreibung wird auch angegeben, ob das detektierte Objekt punktförmig ist oder ob die Koordinatenpunkte eine Strecke markieren. Die Daten werden in einer Schnittstelle abgelegt, auf die von Fahrassistenz-Systemen des Fahrzeugs zugegriffen werden kann.

Das Dokument DE102007016868 A1 gibt ein Verfahren zur Anzeige eines Fahrbahnverlaufs in einem Head-up-Display an. Dies erfolgt insbesondere anhand der Erkennung von Fahrbahnmarkierungen bzw. Fahrbahnrändern und deren anschließender Darstellung im Head-up-Display. Die Darstellung kann beispielsweise anhand von Symbolen erfolgen.

Das Dokument WO2011/141018 A2 betrifft ein Fahrerassistenzsystem zur Bestimmung eines Fahrschlauchs für ein Egofahrzeug, wobei ein Umfelderfassungssensor einer Fahrbahn vor dem Fahrzeug erfasst und Fahrspurmarkierungen und erhabene Fahrbahnbegrenzungen erkennt. Zur Bestimmung des Fahrschlauchs wird eine Gewichtung in Abhängigkeit von der Art der Fahrspurmarkierung bzw. -begrenzung vorgenommen, die anhand der Überfahrbarkeit der jeweiligen Fahrspurmarkierung bzw. - begrenzung bestimmt wird.

Das Dokument DE102005002719 A1 zeigt ein Verfahren zur Kursprädiktion in Fahrerassistenzsystemen für Kraftfahrzeuge, bei dem anhand von Sensorinformationen das Umfeld des Fahrzeugs detektiert wird und eine Kurshypothese erstellt wird. Dabei erfolgt eine Repräsentation der Rohdaten der Sensorinformationen in einem einheitlichen Beschreibungssystem, bei dem zur Repräsentation sämtlicher Objekte Linienstücke dargestellt durch Polynome angewendet werden.

Das Dokument EP2012211 A1 betrifft ein System zur Überwachung des Umfelds eines Fahrzeugs, bei dem für die Zwecke einer Spurwarnung, das Umfelds eines Fahrzeugs detektiert wird und Warnungslinien definiert werden, denen Attribute (nämlich der laterale Abstand zum Bahnschulter und zur Spurbegrenzung) zugeordnet werden.

Es ist die Aufgabe der hier vorliegenden Erfindung ein Verfahren zur Darstellung eines Manöverraums in einer Fahrzeugumgebung mit reduzierter Datenmenge anzugeben.

Die Aufgabe wird durch die unabhängigen Ansprüche gelöst.

Ein wesentlicher Bestandteil der Erfindung ist die Darstellung eines Begrenzungsverlaufs einer aktuell befahrenen Fahrspur (1) durch Positionspunkte(4,7,8,11), die eine vordefinierte Menge von Attributen aufweisen. Der Begrenzungsverlauf ergibt sich z.B. aus der Lage von Fahrspurmarkierungen, einem Bauzaun, der Randbebauung einer Straße, Leitplanken, (parkenden)Fahrzeugen am Fahrbahnrand etc.

Vorzugsweise sind der Abstand, insbesondere ein longitudinaler Abstand, und Anzahl der Positionspunkte (4,7,8,11) adaptiv in Abhängigkeit von zumindest einem der folgenden Parameter vorgebbar
i) Eigengeschwindigkeit des Egofahrzeugs, beispielsweise wird ein großer longitudinalen Abstand der Positionspunkte für die Repräsentation von Fahrstreifenmarkierungen insbesondere in Autobahnszenen gewählt; ein entsprechend geringer Abstand der Positionspunkte wird bei der Modellierung der Fahrraumbegrenzung bei Einparkvorgängen bevorzugt gewählt. Vorzugsweise wird ein großer Abstand bei einer großen Eigengeschwindigkeit und entsprechend eine kleiner Abstand bei einer kleinen Eigengeschwindigkeit gewählt.
ii) Komplexität des Szenarios, z.B. handelt es sich um eine Fahrsituation in der Stadt mit vielen Umgebungsobjekten und Verkehrszeichen ist ein geringer Abstand der Positionspunkte erforderlich
iii) kurviger Verlauf der Fahrspur, auf kurvigen Streckenabschnitten ist ein geringer Abstand von Positionspunkten erforderlich
iv) Breite der Fahrspur, insbesondere gilt je breiter die Fahrspur, desto größer kann der Abstand der Positionspunkte gewählt werden.

Gemäß der Erfindung ist ein Attribut der Positionspunkte (4,7,8) vorgesehen, dass eine laterale Breite angibt. Die laterale Breite ist ein Maß für einen als Manöverraum nutzbaren Bereich, der jenseits des Positionspunktes, d.h. außerhalb der durch die Positionspunkte (4,7,8,11) begrenzten Fahrspur, angeordnet ist. Die laterale Breite ist z.B. groß wenn jenseits von überfahrbaren Fahrspurmarkierungen eine weitere Fahrspur angeordnet ist, die frei befahrbar ist. Die laterale Breite ist z.B. klein bzw. gleich Null zu wählen, wenn jenseits von überfahrbaren Fahrspurmarkierungen direkt eine nicht überfahrbare Randbebauung z.B. eine Böschung beginnt. Die laterale Breite gibt vorzugsweise die Breite eines Manöverraums jenseits eines Positionspunktes direkt an.

Vorzugsweise ist die laterale Breite von Positionspunkten (8), die nicht überfahrbare Fahrspurbegrenzungen wie z.B. Leitplanken oder einen Bauzaun gleich Null.

In einer weiteren Ausgestaltung der Erfindung ist die laterale Breite von Positionspunkten (7), die überfahrbare Fahrspurmarkierungen repräsentieren, größer als Null.

In einer bevorzugten Ausgestaltung der Erfindung ist die laterale Breite von Positionspunkten, die überfahrbare Fahrspurmarkierungen repräsentieren, gleich Null, wenn an dieser Stelle bei einem Spurwechsel des Egofahrzeugs auf die benachbarten Spur, wobei die benachbarte Spur ebenfalls durch die genannten Positionspunkte begrenzt wird, ein Kollisionsrisiko mit entgegenkommenden oder überholenden Fahrzeugen (9) besteht.

In einer positiven Ausgestaltung der Erfindung ist als ein weiteres Attribut der Positionspunkte (11) vorgesehen. Das weitere Attribut ist ein Maß für eine Einschnürung des als Manöverraum nutzbaren Bereichs innerhalb der durch die Positionspunkte begrenzten Fahrspur. Dieses Attribut gibt also an, ob der gesamte durch Positionspunkte begrenzte Raum als Manöverraum genutzt werden kann oder ob es Hindernisse (12) gibt, die umfahren werden müssen.

Insbesondere ist das weitere Attribut bei keinem Hindernis auf der Fahrspur mit einem vorgegebenen Standardwert belegt.

In einer weiteren positiven Ausgestaltung der Erfindung nimmt das weitere Attribut für die Positionspunkte, die einen Streckenabschnitt begrenzen, auf dem sich ein Hindernis (11) befindet, einen Wert ein, der von dem vorgegebenen Standardwert abweicht. In einer positiven Ausgestaltung gibt das weitere Attribut an, welcher bzw. wie viel Raum tatsächlich als Manöverraum zur Verfügung steht.

Es wird ein Verfahren für ein Fahrerassistenzsystem beansprucht, das für ein Fahrzeug (1) eine zukünftige Trajektorie basierend auf den Daten eines Sensorsystems zur Umfelderfassung bestimmt. Dazu werden Umgebungsobjekte und deren Positionen anhand der Sensordaten ermittelt und anhand der erkannten Objekte wird eine Fahrzeugumgebung des Egofahrzeugs durch Positionspunkte mit einem Verfahren wie zuvor beschrieben dargestellt. Diese Umgebungsdarstellung wird über einen Fahrzeugbus zu einem Steuergerät übertragen. Das Steuergerät ist derart ausgestaltet, dass eine zukünftige Trajektorie des Egofahrzeugs bestimmt werden kann.

Zudem wird ein Fahrerassistenzsystem mit Sensorsystem zur Umfelderfassung und einer Datenauswerteeinheit auf der ein Verfahren wie zuvor beschrieben hinterlegt ist beansprucht. Dazu ist die Datenauswerteinheit über ein Fahrzeug- Bussystem mit einem Steuergerät zur Steuerung einer Fahrerassistenzfunktion verbunden.

Die Erfindung wird im Folgenden anhand von Ausführungsbeispielen und Zeichnungen näher beschrieben.

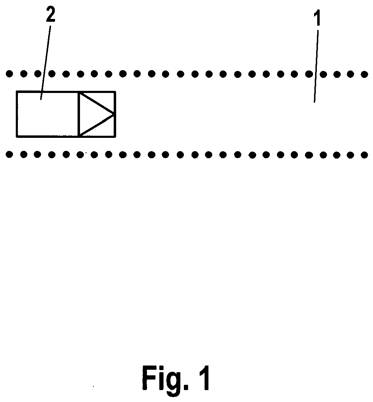

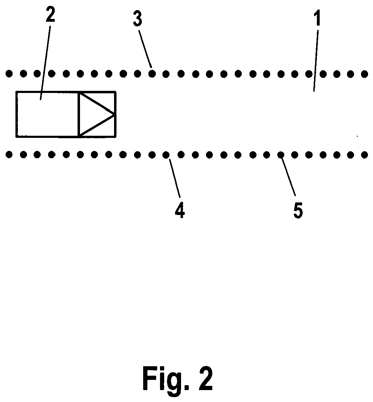

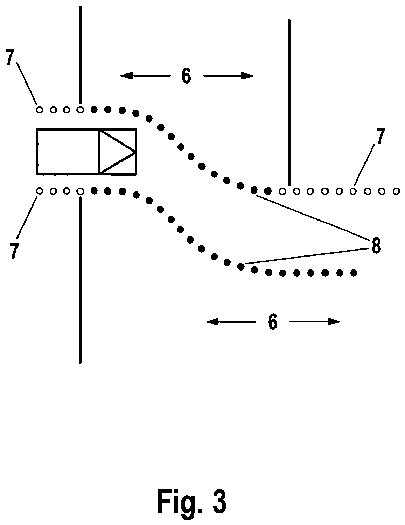

Ausgangspunkt ist die momentan vom EGO-Fahrzeug 2 befahrene Fahrspur 1 wie in Figur 1 dargestellt. Diese ist definiert als die vorausliegende Freifläche bis zur jeweiligen lateralen Begrenzung. Diese Begrenzungen können beispielsweise Fahrstreifenmarkierungen, bauliche Begrenzungen, insbesondere Baustellenleitwände, und bzw. oder statische Objekte repräsentieren, die die momentan befahrene Fahrspur lateral einschränken. Verlauf und der Form der Fahrspur 1 sind erfindungsgemäß durch je eine links- bzw. rechtsseitige Liste von Positionspunkten dargestellt. Longitudinaler Abstand und Zahl der Positionspunkte können adaptiv nach Gesichtspunkten wie Eigengeschwindigkeit oder Komplexität des Szenarios an die momentan vorliegenden Erfordernisse der jeweiligen Situation angepasst werden. Jeder Positionspunkt besitzt eine bestimmte, vordefinierte Menge an Attributen wie in Figur 2 dargestellt. Ein zentrales Attribut ist hierbei die laterale Breite des Bereiches jenseits des Positionspunktes. Mit einer solchen Darstellung kann z.B. auch die Eigenschaft "Nicht überfahrbar" durch die Angabe einer lateralen Breite von Null abgedeckt werden wie z.B. in Figur 3 dargestellt. Dort fährt das Fahrzeug in einen Baustellenbereich 6 ein. In dem Bereich in dem die Fahrspur 1 an die Baustelle 6 grenzt, sind die Positionspunkte 8 mit dem Attribut laterale Breite gleich Null belegt. Außerhalb des Baustellenbereichs sind die Positionspunkte 7 mit dem Attribut laterale Breite größer Null belegt.

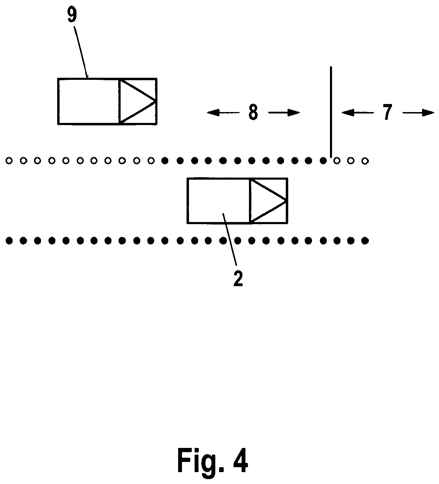

Zusätzlich kann die als Manöverraum nutzbare Breite der Fahrspur 1 jenseits der Begrenzungslinie auch durch bewegliche Objekte, beispielsweise durch Fahrzeuge beschränkt sein. In einer bevorzugten Ausgestaltung der Erfindung wird diese Einschränkung über das Attribut der lateralen Breite beschrieben. Eine Fahrspurbegrenzung wird insbesondere mit Positionspunkten 8 als "nicht überfahrbar" markiert, wenn ein Überfahren aufgrund einer Gegenverkehrssituation oder eines sich von hinten nahenden Fahrzeugs wie in Figur 4 dargestellt nicht sicher möglich ist, obschon die Linie zum Betrachtungszeitpunkt physikalisch überfahrbar wäre.

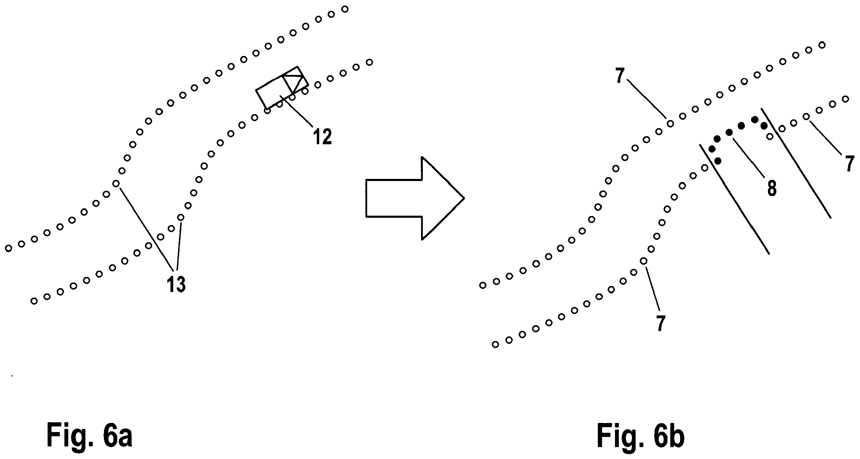

In Figur 6a ist beispielhaft eine Szene dargestellt, in der eine Fahrbahn an einer Stelle durch ein stehendes Fahrzeug 12 am Fahrbahnrand verengt ist. Beide Seitenbegrenzungen 13 der Fahrbahn sind überfahrbar. In Figur 6b ist die dieselbe Szene mit Positionspunkten 7,8 dargestellt, die die Fahrspur 1 begrenzen, dabei wurde die Kontur des stehenden Fahrzeugs 12 berücksichtigt. Die Positionspunkte 8, die das stehende Fahrzeug begrenzen, sind mit dem Attribut der lateralen Breite gleich Null versehen, da an dieser Stelle die Fahrspurbegrenzung nicht überfahren werden kann. Die anderen Positionspunkte 7, die nicht das stehende Fahrzeug begrenzen, sind mit dem Attribut der lateralen Breite größer Null versehen, da an dieser Stelle die Fahrspurbegrenzung überfahren werden kann.

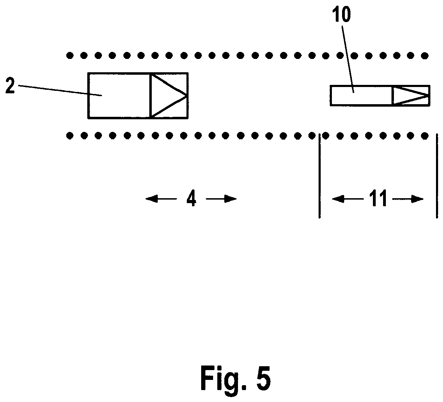

Die Modellierung stehender Objekte, die die momentan befahrene Fahrspur belegen, kann durch Nutzung eines weiteren Attributs geschehen, welches den verbleibenden Manöverraum innerhalb der beiden Begrenzungslinien repräsentiert. Dieses Attribut besitzt einen vorgegebenen Standard-Wert, wenn sich kein Hindernis auf der Fahrspur befindet. In einer bevorzugten Ausgestaltung trägt das weitere Attribut ansonsten den verbleibenden Freiraum als physikalischen Distanzwert. Dieses Szenario ist beispielhaft in Abbildung 5 dargestellt. Dort befindet sich ein Hindernis 10 (hier ein stehendes Motorrad) auf der fahrspur 1 des Egofahrzeugs 2. An der Position des Hindernis machen attributierte Positionspunkte 11 die Einschnürung kenntlich.

Vorteilhaft an der hier vorgestellten Erfindung ist eine vollständige Beschreibung des vorausliegenden Freiraumes innerhalb der momentanen Fahrspur, sowie die Darstellung der seitlichen Überfahrbarkeiten als Grundlage für eine Trajektorienbestimmung für ein ggf. notwendiges Verlassen der momentan befahrenen Fahrspur. Der besondere Vorteil der Repräsentation durch eine Liste von Begrenzungspunkten liegt in der Beliebigkeit der Darstellung von Fahrspurverläufen, dies gelingt im Gegensatz zu einer analytischen Darstellung mit geringerem Aufwand. Es ist möglich, beliebige Verläufe der momentanen Fahrspur zu repräsentieren, die benötigen Datenmengen sind durch eine abstrakte Punktinformation gegenüber eine dichten Freiflächenrepräsentation erheblich vermindert, so dass der Einsatz von serientauglichen Kommunikationsmitteln wie z.B. CAN möglich wird. Die Repräsentation der Begrenzungen des momentanen Pfades ist insbesondere sensorneutral, es ist problemlos möglich, neue Merkmale in der Darstellung zu berücksichtigen, wenn diese durch neue Sensoren erfassbar werden, ein Beispiel hierfür sind Bordsteinkanten.

### Liste der Bezugszeichen

- 1: momentan befahrene Fahrspur
- 2: Egofahrzeug
- 3: linke Fahrspurbegrenzung
- 4: rechte Fahrspurbegrenzung
- 5: attributierter Positionspunkt
- 6: Baustelle
- 7: überfahrbarer Positionspunkt mit einer lateralen Breite größer als Null
- 8: nicht überfahrbarer Positionspunkt mit einer lateralen Breite gleich Null
- 9: anderes Fahrzeug
- 10: Hindernis auf der Fahrspur, z.B. ein stehendes Objekt (Motorrad)
- 11: Positionspunkt mit dem Attribut Einschnürung größer Null
- 12: Fahrzeug am Fahrbahnrand
- 13: beide Seitenbegrenzungen sind überfahrbar

## Patentansprüche

1. Verfahren für ein Fahrerassistenzsystem eines eine Fahrspur (1) befahrenden Egofahrzeugs (2) zur Bestimmung einer zukünftigen Trajektorie des Egofahrzeugs basierend auf den Daten eines Sensorsystems zur Umfelderfassung des Egofahrzeugs (2), wobei die Fahrspur (1) definiert ist als dem Egofahrzeug (2) vorausliegende Freifläche zwischen einer lateral linksseitigen und einer lateral rechtsseitigen Fahrspurbegrenzung, wobei
i) Umgebungsobjekte und deren Positionen vor dem Egofahrzeug anhand der Sensordaten ermittelt werden,
ii) eine Datenauswerteeinheit des Fahrerassistenzsystems anhand der ermittelten Umgebungsobjekte eine Darstellung der Fahrzeugumgebung des Egofahrzeugs durch Positionspunkte erzeugt,
iii) die Darstellung der Fahrzeugumgebung des Egofahrzeugs über einen Fahrzeugbus zu einem Steuergerät zur Bestimmung der zukünftigen Trajektorie des Egofahrzeugs übertragen wird,
**dadurch gekennzeichnet, dass**
Verlauf und Form der Fahrspur (1) durch eine auf die durch das Egofahrzeug (2) befahrene Fahrspur (1) bezogene linksseitige und rechtsseitige Liste der Positionspunkte (5) repräsentiert werden, wobei jeder Positionspunkt eine vordefinierte Menge von Attributen aufweist, die eine auf die durch das Egofahrzeug (2) befahrene Fahrspur (1) bezogene laterale oder seitliche Überfahrbarkeit der durch die Positionspunkte repräsentierten Fahrspurbegrenzung angeben, wobei ein Attribut der Positionspunkte (5) eine auf die Fahrspur (1) bezogene laterale Breite angibt, und wobei die laterale Breite ein Maß ist für einen als Manöverraum nutzbaren Bereich außerhalb der durch die linksseitige und rechtsseitige Liste der Positionspunkte (5) repräsentierten Fahrspurbegrenzung.

2. Verfahren nach Anspruch 1,
**dadurch gekennzeichnet, dass**
ein longitudinaler Abstand und eine Anzahl der Positionspunkte der linkseitigen und rechtsseitigen Liste von Positionspunkten entlang der Fahrspur (1) adaptiv in Abhängigkeit von zumindest einem der folgenden Parameter vorgebbar sind
i) Eigengeschwindigkeit des Egofahrzeugs
ii) Komplexität des Szenarios
iii) kurviger Verlauf der Freifläche
viii)erkannte Verengung oder Verbreiterung der Freifläche

3. Verfahren nach Anspruch 1,
**dadurch gekennzeichnet, dass**
die laterale Breite der Positionspunkte (8), die nicht überfahrbare Fahrspurbegrenzungen wie z.B. Leitplanken oder einen Bauzaun repräsentieren, gleich Null ist.

4. Verfahren nach Anspruch 1,
**dadurch gekennzeichnet, dass**
die laterale Breite von Positionspunkten (7), die überfahrbare Fahrspurmarkierungen repräsentieren größer als Null ist.

5. Verfahren nach Anspruch 1,
**dadurch gekennzeichnet, dass**
die laterale Breite von Positionspunkten, die überfahrbare Fahrspurmarkierungen repräsentieren, Null ist, wenn an dieser Stelle bei einem Spurwechsel des Egofahrzeugs (1) auf die benachbarten Spur, die ebenfalls durch die genannten Positionspunkte begrenzt wird, ein Kollisionsrisiko mit entgegenkommenden oder überholenden Fahrzeugen besteht.

6. Verfahren nach einem der vorherigen Ansprüche,
**dadurch gekennzeichnet, dass**
als ein weiteres Attribut der Positionspunkte (11) ein Maß für eine Einschnürung des als Manöverraum nutzbaren Bereichs innerhalb der durch die Positionspunkte begrenzten Fahrspur (1) vorgesehen ist.

7. Verfahren nach Anspruch 6,
**dadurch gekennzeichnet, dass**
das weitere Attribut bei keinem Hindernis (10) auf der Fahrspur mit einem vorgegebenen Wert belegt wird.

8. Verfahren nach Anspruch 6
**dadurch gekennzeichnet, dass**
das weitere Attribut der Positionspunkte (11) bei einem Hindernis (10) auf der Fahrspur den Wert angibt, der tatsächlich als Manöverraum zur Verfügung steht.

9. Fahrerassistenzsystem mit Sensorsystem zur Umfelderfassung und einer Datenauswerteeinheit auf der ein Verfahren nach einem der Ansprüche 1 bis 8 hinterlegt ist, wobei die Datenauswerteinheit über ein Fahrzeug-Bussystem mit einem Steuergerät zur Steuerung einer Fahrerassistenzfunktion verbunden ist.

## Claims

1. Method for a driver assistance system of an ego vehicle (2) driving along a driving lane (1) for determining a future trajectory of the ego vehicle based on the data of a sensor system for capturing the vicinity of the ego vehicle (2), wherein the driving lane (1) is defined as a free area lying ahead of the ego vehicle (2) between a laterally left-side and a laterally right-side driving lane boundary, wherein
i) environment objects and their positions in front of the ego vehicle are ascertained using the sensor data,
ii) a data evaluation unit of the driver assistance system generates a presentation of the vehicle environment of the ego vehicle by way of position points using the ascertained environment objects,
iii) the presentation of the vehicle environment of the ego vehicle is transmitted, via a vehicle bus, to a control unit for determining the future trajectory of the ego vehicle,
**characterized in that**
the course and shape of the driving lane (1) are represented by a left-side and right-side list of the position points (5) with respect to the driving lane (1) along which the ego vehicle (2) is driving, wherein each position point has a predefined set of attributes that indicate, with respect to the driving lane (1) along which the ego vehicle (2) is driving, an ability of a vehicle to laterally drive over the driving lane boundary represented by the position points, wherein one attribute of the position points (5) indicates a lateral width with respect to the driving lane (1), and wherein the lateral width is a measure of a region outside the driving lane boundary represented by the left-side and right-side list of the position points (5), which is usable as manoeuvring space.

2. Method according to Claim 1, **characterized in that** a longitudinal distance and a number of the position points of the left-side and right-side list of position points along the driving lane (1) is adaptively specifiable in dependence on at least one of the following parameters:
i) the own speed of the ego vehicle
ii) the complexity of the scenario
iii) the curved course of the free area
viii) identified narrowing or widening of the free area.

3. Method according to Claim 1, **characterized in that** the lateral width of the position points (8) that represent driving lane boundaries over which it is not possible for a vehicle to drive, for example crash barriers or a site fence, is zero.

4. Method according to Claim 1, **characterized in that** the lateral width of position points (7) that represent driving lane markings over which it is possible for a vehicle to drive is greater than zero.

5. Method according to Claim 1, **characterized in that** the lateral width of position points that represent driving lane markings over which it is possible for a vehicle to drive is zero if at this point a collision risk with oncoming or overtaking vehicles exists during a lane change of the ego vehicle (1) to the adjacent lane, which is likewise bounded by the aforementioned position points.

6. Method according to one of the preceding claims, **characterized in that** a measure of a constriction of the region that is usable as manoeuvring space within the driving lane (1) bounded by the position points is provided as a further attribute of the position points (11) .

7. Method according to Claim 6, **characterized in that** the further attribute is assigned a specified value if there is no obstacle (10) in the driving lane.

8. Method according to Claim 6, **characterized in that**, if there is an obstacle (10) in the driving lane, the further attribute of the position points (11) indicates the value that is actually available as manoeuvring space.

9. Driver assistance system with a sensor system for vicinity capturing and a data evaluation unit in which a method according to one of Claims 1 to 8 is stored, wherein the data evaluation unit is connected, via a vehicle bus system, to a control unit for controlling a driver assistance function.

## Revendications

1. Procédé pour un système d'assistance au conducteur d'un véhicule ego (2) roulant sur une voie de circulation (1), destiné à déterminer une trajectoire future du véhicule ego sur la base des données d'un système de capteur destiné à détecter l'environnement du véhicule ego (2), la voie de circulation (1) étant définie comme la surface libre précédant le véhicule ego (2) entre une limite de voie de circulation latérale côté gauche et une limite de voie de circulation latérale côté droit, dans lequel
i) des objets environnants et leurs positions devant le véhicule ego sont établis à l'aide des données de capteur,
ii) une unité d'évaluation de données du système d'assistance au conducteur génère à l'aide des objets environnants établis une représentation de l'environnement de véhicule du véhicule ego par des points de position,
iii) la représentation de l'environnement de véhicule du véhicule ego est transmise par un bus de véhicule à un appareil de commande pour déterminer la trajectoire future du véhicule ego,
**caractérisé en ce que** le tracé et la forme de la voie de circulation (1) sont représentés par une liste des points de position (5) côté gauche et côté droit par rapport à la voie de circulation (1) fréquentée par le véhicule ego (2), chaque point de position présentant une quantité prédéfinie d'attributs qui indiquent une possibilité de franchissement latérale ou sur le côté par rapport à la voie de circulation (1) fréquentée par le véhicule ego (2), un attribut des points de position (5) indiquant une largeur latérale par rapport à la voie de circulation (1), et la largeur latérale étant une mesure d'une zone utilisable comme espace de manœuvre, à l'extérieur de la limite de voie de circulation représentée par la liste des points de position (5) côté gauche et côté droit.

2. Procédé selon la revendication 1, **caractérisé en ce qu'**une distance longitudinale et un nombre des points de position de la liste de points de position côté gauche et côté droit peuvent être spécifiés le long de la voie de circulation (1) de manière adaptative en fonction d'au moins l'un des paramètres suivants
i) la vitesse propre du véhicule ego,
ii) la complexité du scénario,
iii) le tracé en courbe de la surface libre,
viii) un rétrécissement ou un élargissement reconnu(e) de la surface libre.

3. Procédé selon la revendication 1, **caractérisé en ce que** la largeur latérale des points de position (8) qui représentent des limites de voie de circulation infranchissables, comme par exemple des glissières de sécurité ou une clôture de chantier, est égale à zéro.

4. Procédé selon la revendication 1, **caractérisé en ce que** la largeur latérale de points de position (7) qui représentent des marquages de voie de circulation franchissables est supérieure à zéro.

5. Procédé selon la revendication 1, **caractérisé en ce que** la largeur latérale de points de position qui représentent des marquages de voie de circulation franchissables est égale à zéro si en cas de changement de voie de circulation du véhicule ego (1) sur la voie de circulation voisine, qui est également limitée par lesdits points de position, il existe à cet endroit un risque de collision avec des véhicules venant en sens inverse ou qui dépassent.

6. Procédé selon l'une quelconque des revendications précédentes, **caractérisé en ce que** comme autre attribut des points de position (11), une mesure d'un rétrécissement de la zone utilisable comme espace de manœuvre est prévue à l'intérieur de la voie de circulation (1) limitée par les points de position.

7. Procédé selon la revendication 6, **caractérisé en ce que** l'autre attribut reçoit une valeur par défaut en cas d'absence d'obstacle (10) sur la voie de circulation.

8. Procédé selon la revendication 6 **caractérisé en ce qu'**en cas d'obstacle (10) sur la voie de circulation, l'autre attribut des points de position (11) indique la valeur qui est réellement disponible comme espace de manœuvre.

9. Système d'assistance au conducteur, comprenant un système de capteur destiné à détecter l'environnement, et une unité d'évaluation de données sur laquelle est enregistré un procédé selon l'une quelconque des revendications 1 à 8, l'unité d'évaluation de données étant reliée par un système de bus de véhicule à un appareil de commande destiné à commander une fonction d'assistance au conducteur.
